# EUROPEAN PATENT SPECIFICATION

(11) **EP 4 112 510 B1**
(45) Date of publication and mention of the grant of the patent: **22.11.2023**
(21) Application number: 22180468.5
(22) Date of filing: 22.06.2022
(51) Int. Cl.: B65G 47/14, B65B 35/26, B65G 59/06, B65G 65/48

(54) **A DEVICE FOR SUCCESSIVELY FEEDING PILED-UP PACKAGES**
EINE VORRICHTUNG ZUM KONTINUIERLICHEN ZUFÜHREN VON GESTAPELTEN PAKETEN
DISPOSITIF D'ALIMENTATION SUCCESSIVE DE COLIS EMPILES

(30) Priority: 29.06.2021 IT 202100016964
(43) Date of publication of application: 04.01.2023
(73) Proprietor: G.D S.p.A., 40133 Bologna (BO) (IT)
(72) Inventor: SPIRITO, Gilberto, I-40133 Bologna (IT); FERRARI, Michele, I-40133 Bologna (IT); GAMBERINI, Giuliano, I-40133 Bologna (IT)
(74) Representative: Frontoni, Stefano

(56) References cited:
- DE-A1- 1 474 776
- DE-A1- 19 807 757
- ES-A1- 2 245 163
- FR-A1- 2 285 321
- FR-A1- 2 398 002
- US-A- 1 648 476

## Description

### TEXT OF THE DESCRIPTION

The present invention relates to a device for successively feeding stacked packages to a machine for manipulating and/or treating and/or processing the packages, comprising:
- a hopper for containing a stack of packages according to such an arrangement so that the stack of packages extends along a reference axis, wherein the hopper comprises an outlet for letting the package at the bottom of the stack exit; and
- a singularizing member for separating the package leaving the hopper with respect to the remaining packages of the stack.

A known device of the indicated type is described, for example, in the Italian patent application ITBO20110647A1.

In this known solution, the singularizing member consists of a drum, to which the stacked packages are fed along a substantially radial direction. The singularizing drum is arranged with a plurality of housings, obtained on its side surface, to receive a single package inside each housing. The package that reaches the drum and is inserted inside one of the housings is then moved away and separated from the other packages by effect of the rotating movement of the drum.

A further known device which discloses the preamble of claim 1 is shown in ES 2 245 163 A1.

The prior art discussed above has some performance limitations, which are mainly represented by the fact that the drum is unable to operate at high speeds, and is unable to guarantee precise positioning of the packages when they are released to the operating means placed downstream of the drum.

Furthermore, the packages picked up by the drum are subject to shocks and bounces, which can cause damage to the packs.

The present invention aims to provide an improved solution with respect to the prior art discussed,
This object is achieved by means of a device having the characteristics referred to in claim 1. The present invention also relates to a method according to claim 8. The claims form an integral part of the disclosure provided here.

Further characteristics and advantages of the present invention will become evident from the description that follows with reference to the attached drawings, provided purely by way of non-limiting example, wherein:
- Figure 1 represents a cross-sectional view of a preferred embodiment of the device described here;
- Figure 2 represents a view from below of the device of Figure 1;
- Figures 3A-3E schematically represent successive steps of the operation of the device of Figure 1, according to a cross-sectional view along the plane III-III of Figure 2;
- Figure 4 represents another preferred embodiment of the device described here; In the following description various specific details are illustrated aimed at a thorough understanding of the embodiments. The embodiments may be implemented without one or more of the specific details, or with other methods, components, materials, etc. In other cases, known structures, materials or operations are not shown or described in detail to avoid obscuring various aspects of the embodiments.

The references used here are only for convenience and do not therefore define the field of protection or the scope of the embodiments.

As anticipated at the beginning, the present invention relates to a device for feeding stacked packages in succession to a machine for manipulating and/or treating and/or processing the packages.

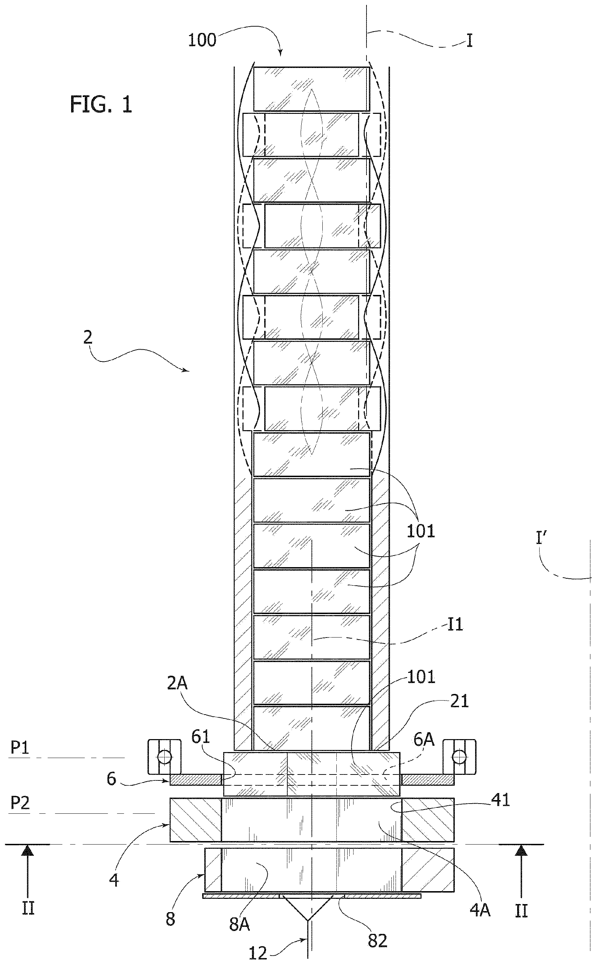

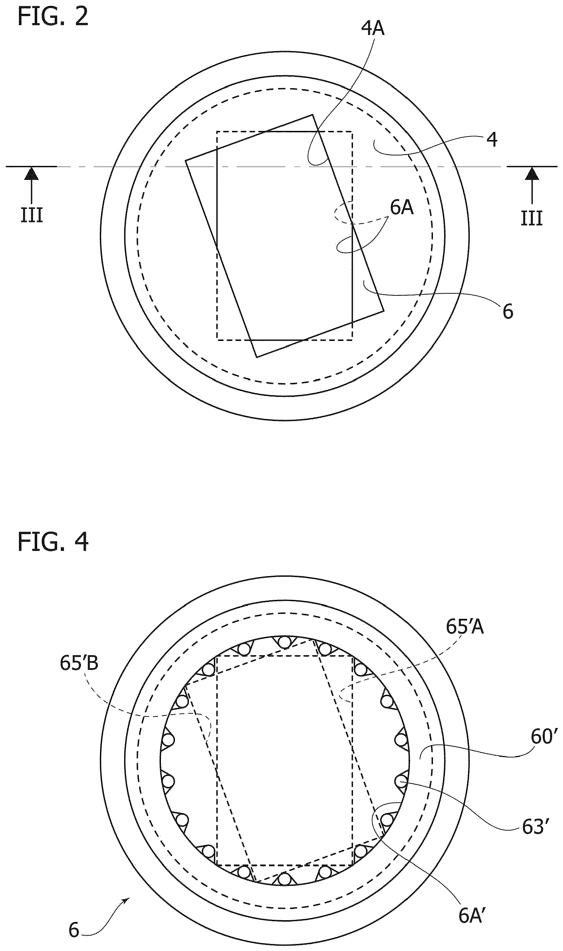

The device described here has been specifically designed for applications in the field of packaging smoking articles, for example, for singularizing packages of smoking articles. In any case, it will be understood that the solution described here can also be used indifferently in other fields, for example, for the packaging of food products, sanitary articles, pharmaceutical products, etc. to name just a few. With reference to Figures 1 and 2, the device described here, indicated as a whole with the reference number 10, comprises a hopper 2 for containing a stack 100 of packages 101 arranged along a reference axis I. The hopper 2 comprises an outlet 2A to release the package 101I arranged at the bottom of the stack 100 from the hopper.

The outlet 2A is delimited by an edge 21 that follows a closed shaped profile corresponding to the external profile of the packages 101, in a plane orthogonal to the reference axis I.

In the illustrated example, the profile of the packages 100 is rectangular, and the profile of the edge 21 which delimits the outlet 2A has a corresponding rectangular shape, in particular, slightly larger to allow the free passage of the packages 100 through the outlet 2A.

The device 10 also comprises a member 4 for receiving a single package 101 leaving the hopper 2, which is equipped with a seat 4A for housing the package. The receiving member 4 is arranged in a plane P2 parallel to the plane P1 of the outlet 2A of the hopper 2.

The seat 4A of the receiving member 4 is delimited, in a plane orthogonal to the reference axis I, by walls 41 that follow the same profile as the outlet 2A of the hopper 2. However, the receiving member 4 is positioned so that its seat 4A has a non-coincident arrangement with respect to the outlet 2A of the hopper 2.

Preferably, the seat 4A is rotated with respect to the outlet 2A.

The receiving member 4 defines a position for picking up the package 101 leaving the hopper, for transferring it to the machine to which the packages stacked in the hopper 2 are intended to be supplied.

In the illustrated example, the seat 4A of the receiving member 4 has no bottom, in order to be directly accessible to the housings 8A of a conveyor 8 rotating around a rotation axis I'. The housings 8A are arranged one after the other below the seat 4A of the receiving member 4 by effect of a rotational movement in steps of the conveyor 8, to each receive a package 101 coming from the hopper 2.

The device 10 comprises a gripping member 12, which is movable with alternate motion along the reference axis I, to pick up the package received inside the seat 4A and insert it inside the housing 8A which is stationed below this seat.

In particular, the gripping member 12 is operated to be arranged at the lower edge of the seat 4A before the package 101 leaving the hopper 2 reaches the seat 4A, so as to stop the descent of the package 101, and, subsequently, to accompany the package inside the housing 8A of the conveyor 8.

As can be seen in Figure 1, the bottom of the housing 8A is provided with an opening 82 to allow the passage of the gripping member 12 for carrying out the indicated actions.

The gripping member 12 may, for example, be a gripping head equipped with suction means or a suction cup.

The device 10 also comprises a singularizing member 6, which is arranged between the outlet 2A of the hopper 2 and the receiving member 4.

The singularizing member 6 has a substantially planar body, oriented orthogonally to the reference axis I, and is equipped with an opening 6A for the passage of each package 101 that emerges from the hopper 2.

The opening 6A is delimited by an edge 61 that substantially defines the same profile as the outlet 2A of the hopper 2.

Furthermore, the singularizing member 6 is rotatable around a rotation axis I1 parallel to the reference axis I, between a receiving position, wherein the opening 6A is arranged to be coincident with the outlet 2A of the hopper 2, for receiving the package leaving the hopper 2, and a releasing position, wherein the opening 6A is arranged to be coincident with the seat 4A of the receiving member 4, for releasing the package that has left the hopper 2 into the seat 4A of the receiving member 4.

In particular, in the receiving position, the rectangular profile of the opening 6A of the singularizing member 6 coincides with the rectangular profile of the outlet 2A, while in the releasing position, the rectangular profile of the opening 6A coincides with the rectangular profile of the seat 4A.

Those skilled in the art will understand that the rotation axis I1 overlaps with the axis around which the seat 4A of the receiving unit 4 is rotated with respect to the outlet 2D of the hopper 2.

Preferably, the rotation axis I1 of the singularizing member 6 passes through the respective centers of symmetry of the rectangular profiles of the outlet 2A of the hopper 2 and of the seat 4A of the receiving member 4. In any case, according to the reciprocal positioning of the outlet 2A and the seat 4A and/or the shape of the relative profiles, it is possible to envisage a rotation axis of the singularizing member 6 that is positioned differently, either always inside the closed profiles of the outlet 2A and of the seat 4A, or outside of these.

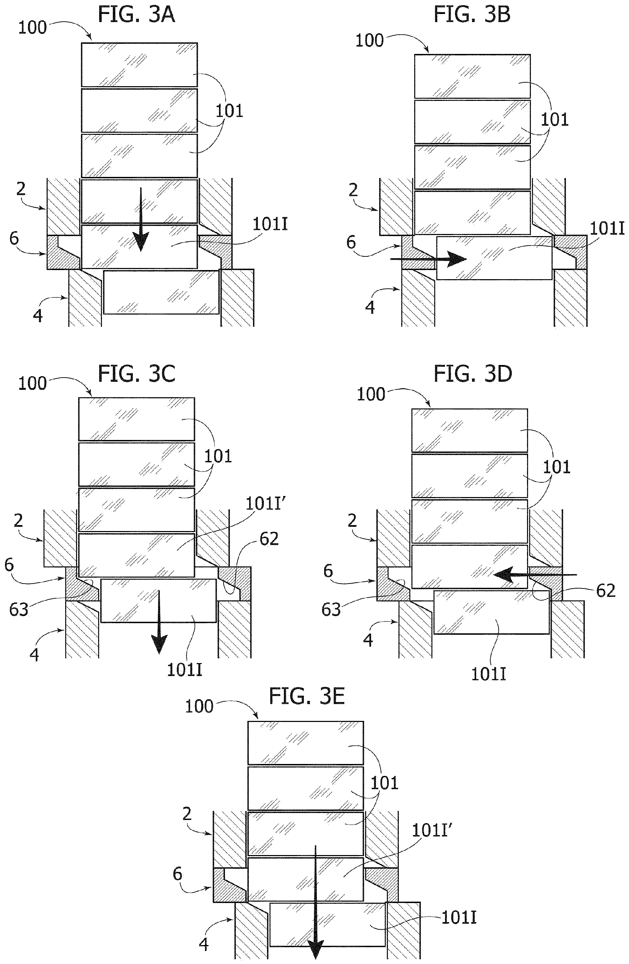

Figures 3A-3E illustrate the operating mode of the singularizing device 6.

In Figure 3A, the singularizing member 6 is in its receiving position, wherein its opening 6A coincides with the outlet 2A of the hopper 2. In this position, the package 101I at the bottom of the stack 100 is inserted inside the opening 6A, causing all the packages in the stack to descend by a pitch equal to the size of each individual package along the reference axis I. The package 101I received in the opening 6A and the same stack 100 above it are supported vertically by the upper side of the receiving member 4, which does not allow the passage of the package 101I, due to the fact that its seat 4A is found not aligned with the opening 6A of the singularizing member 6.

Subsequently, the singularizing member 6 is rotated to be brought into its releasing position (Figure 3B), in which its opening 6A now coincides with the seat 4A of the receiving member 4. In this position, the package 101I can be inserted inside the seat 4A of the receiving member 4, and in this way it is separated from the other packages 101 of the stack 100 (Figure 3C).

Finally, the singularizing member 6 returns to the receiving position to separate a new package 101I' at the bottom of the stack 100 (Figures 3D and 3E).

Preferably, the singularizing member 6 has helical surfaces 62, 63, which delimit the opening 6A and have the function of accompanying and guiding the package 1011 in its movement along the reference axis I, during rotation of the singularizing member 6 from the releasing position to the receiving position.

In particular, with reference to Figures 3C and 3D, the surface 63 engages the package 101I and exerts a vertical support action thereon to guide its descent into the opening 6A. On the other hand, the opposite surface 62 engages the package 1011 already separated from the stack 100 and contains it laterally, guiding it in its descent movement.

In this way, a smooth and jam-free descent of the packets is guaranteed.

The singularizing element 6 is operated in its oscillation movement around the rotation axis I1 by a respective actuator (not illustrated).

Figure 4 illustrates a different embodiment of the singularizing member 6, which allows the same member to be operated according to a rotation movement with a constant rotation direction, rather than according to an oscillation movement.

According to this embodiment, the singularizing member 6 comprises a ring 60', which is rotatable around the rotation axis I1, and is centrally equipped with a circular opening 6A' coaxial to the rotation axis I1. The ring 60' has a plurality of teeth 63' protruding from the inner edge of the circular opening 6A', which are configured to identify a plurality of opening sectors 65' for the passage of the packages 101. In Figure 4, two different sectors 65'A, 65'B are highlighted by means of a dashed line. These sectors each have the same rectangular profile of the outlet 2A of the hopper 2 and of the seat 4A of the receiving member 4.

The singularizing member 6 thus made is operated according to a stepwise rotation movement, with a constant rotation direction, which carries - one after the other - each sector 65', firstly, into a receiving position, wherein this sector coincides with the outlet 2A of the hopper, and subsequently into a releasing position, wherein this sector coincides with the seat 4A of the receiving member. In this way, an operation is carried out that corresponds exactly to what is described above with reference to Figures 3A-3E, with the only difference that, in this case, the different opening sectors 65' intervene to separate the packages 101 from the stack 100. Of course, without prejudice to the principle of the invention, the details of construction and the embodiments may vary, even significantly, with respect to those illustrated here, purely by way of non-limiting example, without departing from the scope of the invention as defined by the attached claims.

## Claims

1. A device (10) for successively feeding stacked packages (101) to a machine for manipulating and/or treating and/or processing the packages, comprising:
- a hopper (2) for containing a stack (100) of packages (101) according to such an arrangement that the stack of packages (100) extends along a reference axis (I), wherein the hopper (2) comprises an outlet (2A) for letting the package (101I) at the bottom of the stack (100) exit;
- a singularizing member (6) for separating the package leaving the hopper with respect to the remaining packages of the stack;
- a member (4) for receiving a single package (101) leaving the hopper, which is provided with a seat (4A) for housing the package, the seat being located on a plane (P2) parallel to the plane (P 1) of the outlet (2A) of the hopper, and arranged so that it is not coincident with the outlet (2A) of the hopper, wherein the receiving member (4) defines a position for the package to be picked up and transferred to the machine;
wherein the singularizing member (6) is arranged between the outlet (2A) of the hopper and the receiving member (4), and is provided with an opening (6A; 6A') for the passage of a single package leaving the hopper (2),
wherein the singularizing member (6) is, furthermore, rotatable around a rotation axis (I1) parallel to the reference axis (I), between a receiving position, in which the opening (6A; 6A') is arranged to be coincident with the outlet (2A) of the hopper (2), for receiving the package leaving the hopper (2), and a releasing position, in which the opening (6A; 6A') is arranged to be coincident with the seat (4A) of the receiving member (4), for releasing the package (100) that has left the hopper (2) into the seat (4A) of the receiving member (4); the device being **characterized in that**
the singularizing member (6) has one or more helical surfaces (62, 63), which delimit the opening (6A) for the passage of the package, to exercise an accompanying and guiding action on the package, for moving the package along the reference axis, during rotation of the singularizing device (6) from the releasing position to the receiving position.

2. A device according to claim 1, wherein the outlet (2A) of the hopper (2) and the seat (4A) of the receiving member (4) each have an outer closed profile, in a plane orthogonal to the reference axis (I), and the rotation axis of the singularizing member runs through the inside of both the closed profiles, respectively, of the outlet (2A) of the hopper and of the seat (4A) of the receiving member (4).

3. A device according to claim 2, wherein the rotation axis (I1) of the singularizing member (6) runs through the respective centers of symmetry of the closed profiles of the outlet (2A) of the hopper and of the seat (4A) of the receiving member.

4. A device according to any one of the previous claims, wherein the singularizing member (6) comprises a planar body rotatable about the rotation axis (I1), on which an opening (6A) for the passage of the package is made, and wherein the device comprises an actuator for moving the singularizing member (6) according to an oscillation movement about the rotation axis (I1), between the receiving position and the releasing position.

5. A device according to any one of the preceding claims, wherein the singularizing member (6) comprises a ring (60') that rotates around a rotation axis (I1), which is provided, centrally, with a circular opening (6A') coaxial to the rotation axis (I1), and has a plurality of teeth (63') projecting from the inner edge of the circular opening (60') for identifying a plurality of opening sectors (65') for the passage of the package, which are configured to set themselves, selectively, into an arrangement coinciding with the outlet (2A) of the hopper and into an arrangement coinciding with the seat (4A) of the receiving member (4), in different angular positions of the singularizing member (6) about the rotation axis (I1).

6. A device according to claim 5, wherein the device comprises an actuator for moving the singularizing member according to a rotation movement, about the rotation axis, with a constant rotation direction.

7. A device according to any one of the preceding claims, wherein the device comprises a mobile gripping member (12), for picking up the package released into the seat (4A) of the receiving member (4) and transferring it to the machine.

8. A method for successively feeding stacked packages (101), to a machine for manipulating and/or treating and/or processing packages, by means of a device (10) according to any one of the preceding claims, the method including the steps of:
- arranging a stack (100) of packages (101) in the hopper;
- holding the package (101I) at the bottom of the stack (100) by means of the singularizing member (6) in the releasing position;
- rotating the singularizing member (6) from the releasing position to the receiving position;
- receiving the package (101I) at the bottom of the stack (100) inside the opening (6A) of the singularizing member (6);
- rotating the singularizing member (6) from the releasing position to the receiving position; and
- by means of the singularizing member (6), releasing the package (101) into the seat (4A) of the receiving member (4).

9. A method according to claim 8, wherein receiving the package (101I) at the bottom of the stack (100) inside the opening (6A) of the singularizing member (6) includes maintaining the package inside the opening (6A) of the singularizing member (6) through the receiving member supporting the package from below, during the movement of the singularizing member (6) from the receiving position to the releasing position.

10. A method according to claims 8 or 9, wherein the singularizing member (6) is driven according to an oscillation movement or a rotation movement in a constant direction.

11. A method according to any one of claims 8 to 10, comprising, by means of the gripping member (12), transferring the package from the seat (4A) of the receiving member (4) to the machine (8).

## Patentansprüche

1. Vorrichtung (10) zum kontinuierlichen Zuführen von gestapelten Paketen (101) zu einer Maschine zum Manipulieren und/oder Behandeln und/oder Verarbeiten der Pakete, Folgendes umfassend:
- einen Trichter (2) zum Enthalten eines Stapels (100) von Paketen (101), wobei sich entsprechend einer derartigen Anordnung der Stapel von Paketen (100) entlang einer Bezugsachse (I) erstreckt, wobei der Trichter (2) einen Ausgang (2A) umfasst, um das Paket (1011) an der Unterseite des Stapels (100) austreten zu lassen;
- ein Vereinzelungselement (6) zum Trennen des den Trichter verlassenden Pakets in Bezug zu den verbleibenden Paketen des Stapels;
- ein Element (4) zum Aufnehmen eines den Trichter verlassenden einzelnen Pakets (101), das mit einer Aufnahme (4A) zum Unterbringen des Pakets versehen ist, wobei sich die Aufnahme auf einer Ebene (P2) parallel zur Ebene (P1) des Ausgangs (2A) des Trichters befindet und derart angeordnet ist, dass sie nicht mit dem Ausgang (2A) des Trichters zusammenfällt, wobei das Aufnahmeelement (4) eine Position definiert, an der das Paket aufzunehmen und zur Maschine zu transportieren ist; wobei das Vereinzelungselement (6) zwischen dem Ausgang (2A) des Trichters und dem Aufnahmeelement (4) angeordnet ist und mit einer Öffnung (6A; 6A') für das Passieren des den Trichter (2) verlassenden einzelnen Pakets versehen ist,
wobei das Vereinzelungselement (6) ferner um eine Drehachse (I) parallel zur Bezugsachse (I) zwischen einer Aufnahmeposition, in der die Öffnung (6A; 6A') zur Aufnahme des den Trichter (2) verlassenden Pakets mit dem Ausgang (2A) des Trichters (2) zusammenfallend angeordnet ist, und einer Freigabeposition, in der die Öffnung (6A; 6A') zum Freigeben des Pakets (100), das den Trichter (2) verlassen hat, in die Aufnahme (4A) des Aufnahmeelements (4) mit der Aufnahme (4A) des Aufnahmeelements (4) zusammenfallend angeordnet ist, drehbar ist;
wobei die Vorrichtung **dadurch gekennzeichnet ist, dass** das Vereinzelungselement (6) eine oder mehrere schraubenförmige Flächen (62, 63) aufweist, welche die Öffnung (6A) für das Passieren des Pakets begrenzen, um eine begleitende und führende Aktion auf das Paket auszuüben, um das Paket während der Drehung der Vereinzelungsvorrichtung (6) von der Freigabeposition zur Aufnahmeposition entlang der Bezugsachse zu bewegen.

2. Vorrichtung nach Anspruch 1, wobei der Ausgang (2A) des Trichters (2) und die Aufnahme (4A) des Aufnahmeelements (4) in einer Ebene senkrecht zur Bezugsachse (I) jeweils ein äußeres geschlossenes Profil aufweisen und die Drehachse des Vereinzelungselements durch das Innere beider geschlossener Profile des Ausgangs (2A) des Trichters bzw. der Aufnahme (4A) des Aufnahmeelements (4) verläuft.

3. Vorrichtung nach Anspruch 2, wobei die Drehachse (II) des Vereinzelungselements (6) durch die jeweiligen Symmetriemitten der geschlossenen Profile des Ausgangs (2A) des Trichters und der Aufnahme (4A) des Aufnahmeelements verläuft.

4. Vorrichtung nach einem der vorstehenden Ansprüche, wobei das Vereinzelungselement (6) einen planen Körper umfasst, der um die Drehachse (II) drehbar ist, an dem eine Öffnung (6A) für das Passieren des Pakets hergestellt ist, und wobei die Vorrichtung ein Stellglied umfasst, um das Vereinzelungselement (6) entsprechend einer Pendelbewegung um die Drehachse (II) zwischen der Aufnahmeposition und der Freigabeposition zu bewegen.

5. Vorrichtung nach einem der vorstehenden Ansprüche, wobei das Vereinzelungselement (6) einen Ring (60') umfasst, der sich um eine Drehachse (II) dreht, die mittig mit einer kreisförmigen Öffnung (6A') koaxial zur Drehachse (II) vorgesehen ist und mehrere Zähne (63') aufweist, die von der Innenkante der kreisförmigen Öffnung (60') vorstehen, um mehrere Öffnungssektoren (65') für das Passieren des Pakets zu identifizieren, die dazu ausgelegt sind, sich selbst selektiv in eine Anordnung, die mit dem Ausgang (2A) des Trichters zusammenfällt, und in eine Anordnung, die mit der Aufnahme (4A) des Aufnahmeelements (4) zusammenfällt, in verschiedenen Winkelpositionen des Vereinzelungselements (6) um die Drehachse (II) einzustellen.

6. Vorrichtung nach Anspruch 5, wobei die Vorrichtung ein Stellglied zum Bewegen des Vereinzelungselements entsprechend einer Drehbewegung um die Drehachse mit einer konstanten Drehrichtung umfasst.

7. Vorrichtung nach einem der vorstehenden Ansprüche, wobei die Vorrichtung ein mobiles Greifelement (12) zum Aufnehmen des in die Aufnahme (4A) des Aufnahmeelements (4) freigegebenen Pakets und dessen Transport zur Maschine umfasst.

8. Verfahren zum kontinuierlichen Zuführen von gestapelten Paketen (101) zu einer Maschine zum Manipulieren und/oder Behandeln und/oder Verarbeiten von Paketen mittels einer Vorrichtung (10) nach einem der vorstehenden Ansprüche, wobei das Verfahren die folgenden Schritte umfasst:
- Anordnen eines Stapels (100) von Paketen (101) in dem Trichter;
- Halten des Pakets (1011) an der Unterseite des Stapels (100) mittels des Vereinzelungselements (6) in der Freigabeposition;
- Drehen des Vereinzelungselements (6) von der Freigabeposition zur Aufnahmeposition;
- Aufnehmen des Pakets (1011) an der Unterseite des Stapels (100) innerhalb der Öffnung (6A) des Vereinzelungselements (6);
- Drehen des Vereinzelungselements (6) von der Freigabeposition zur Aufnahmeposition und
- Freigeben des Pakets (101) in die Aufnahme (4A) des Aufnahmeelements (4) mittels des Vereinzelungselements (6) .

9. Verfahren nach Anspruch 8, wobei das Aufnehmen des Pakets (1011) an der Unterseite des Stapels (100) innerhalb der Öffnung (6A) des Vereinzelungselements (6) das Halten des Pakets innerhalb der Öffnung (6A) des Vereinzelungselements (6) durch das Tragen des Pakets von unten durch das Aufnahmeelement während der Bewegung des Vereinzelungselements (6) von der Aufnahmeposition zur Freigabeposition umfasst.

10. Verfahren nach Anspruch 8 oder 9, wobei das Vereinzelungselement (6) entsprechend einer Pendelbewegung oder Drehbewegung in eine konstante Richtung angetrieben wird.

11. Verfahren nach einem der Ansprüche 8 bis 10, umfassend Transportieren des Pakets von der Aufnahme (4A) des Aufnahmeelements (4) zur Maschine (8) mittels des Greifelements (12).

## Revendications

1. Dispositif (10) d'alimentation successive de colis empilés (101) vers une machine de manipulation et/ou de traitement et/ou de gestion des colis, comprenant :
une trémie (2) destinée à contenir une pile (100) de colis (101) selon un agencement tel que la pile de colis (100) s'étend le long d'un axe de référence (I), la trémie (2) comprenant une sortie (2A) pour laisser sortir le colis (101I) au bas de la pile (100) ;
un élément de singularisation (6) destiné à séparer le colis quittant la trémie par rapport aux colis restants de la pile ;
un élément (4) destiné à recevoir un seul colis (101) quittant la trémie, qui est pourvu d'un siège (4A) destiné à accueillir le colis, le siège étant situé sur un plan (P2) parallèle au plan (P1) de la sortie (2A) de la trémie, et agencé de sorte à ne pas coïncider avec la sortie (2A) de la trémie, l'élément de réception (4) définissant une position pour le colis à saisir et à transférer vers la machine ;
l'élément de singularisation (6) étant agencé entre la sortie (2A) de la trémie et l'élément de réception (4), et étant pourvu d'une ouverture (6A ; 6A') pour le passage d'un seul colis quittant la trémie (2),
l'élément de singularisation (6) étant, en outre, rotatif autour d'un axe de rotation (I1) parallèle à l'axe de référence (I), entre une position de réception, dans laquelle l'ouverture (6A ; 6A') est agencée pour coïncider avec la sortie (2A) de la trémie (2), pour recevoir le colis quittant la trémie (2), et une position de libération, dans laquelle l'ouverture (6A ; 6A') est agencée pour coïncider avec le siège (4A) de l'élément de réception (4), pour libérer le colis (100) qui a quitté la trémie (2) dans le siège (4A) de l'élément de réception (4) ; le dispositif étant **caractérisé en ce que**
l'élément de singularisation (6) comprend une ou plusieurs surfaces hélicoïdales (62, 63), qui délimitent l'ouverture (6A) pour le passage du colis, afin d'exercer une action d'accompagnement et de guidage sur le colis, pour déplacer le colis le long de l'axe de référence, pendant la rotation du dispositif de singularisation (6) de la position de libération à la position de réception.

2. Dispositif selon la revendication 1, la sortie (2A) de la trémie (2) et le siège (4A) de l'élément de réception (4) ayant chacun un profil extérieur fermé, dans un plan orthogonal à l'axe de référence (I), et l'axe de rotation de l'élément de singularisation passant par l'intérieur des deux profils fermés, respectivement, de la sortie (2A) de la trémie et du siège (4A) de l'élément de réception (4).

3. Dispositif selon la revendication 2, l'axe de rotation (I1) de l'élément de singularisation (6) passant par les centres de symétrie respectifs des profils fermés de la sortie (2A) de la trémie et du siège (4A) de l'élément de réception.

4. Dispositif selon l'une quelconque des revendications précédentes, l'élément de singularisation (6) comprenant un corps plan rotatif autour de l'axe de rotation (I1), sur lequel est pratiquée une ouverture (6A) pour le passage du colis, et le dispositif comprenant un actionneur pour déplacer l'élément de singularisation (6) selon un mouvement d'oscillation autour de l'axe de rotation (I1), entre la position de réception et la position de libération.

5. Dispositif selon l'une quelconque des revendications précédentes, l'élément de singularisation (6) comprenant un anneau (60') qui tourne autour d'un axe de rotation (I1), qui est pourvu, au centre, d'une ouverture circulaire (6A') coaxiale à l'axe de rotation (I1), et qui a une pluralité de dents (63') faisant saillie à partir du bord intérieur de l'ouverture circulaire (60') pour identifier une pluralité de secteurs d'ouverture (65') pour le passage du colis, qui sont conçus pour se placer sélectivement dans un agencement coïncidant avec la sortie (2A) de la trémie et dans un agencement coïncidant avec le siège (4A) de l'élément de réception (4), dans différentes positions angulaires de l'élément de singularisation (6) autour de l'axe de rotation (I1).

6. Dispositif selon la revendication 5, le dispositif comprenant un actionneur pour déplacer l'élément de singularisation selon un mouvement de rotation, autour de l'axe de rotation, avec un sens de rotation constant.

7. Dispositif selon l'une quelconque des revendications précédentes, le dispositif comprenant un élément de préhension mobile (12), pour saisir le colis libéré dans le siège (4A) de l'élément de réception (4) et le transférer à la machine.

8. Procédé d'alimentation successive de colis empilés (101), vers une machine de manipulation et/ou de traitement et/ou de gestion de colis, au moyen d'un dispositif (10) selon l'une quelconque des revendications précédentes, le procédé comprenant les étapes consistant à :
disposer une pile (100) de colis (101) dans la trémie ;
maintenir le colis (101I) au bas de la pile (100) au moyen de l'élément de singularisation (6) dans la position de libération ;
faire tourner l'élément de singularisation (6) de la position de libération à la position de réception ;
recevoir le colis (101I) au bas de la pile (100) à l'intérieur de l'ouverture (6A) de l'élément de singularisation (6) ;
faire tourner l'élément de singularisation (6) de la position de libération à la position de réception ; et
au moyen de l'élément de singularisation (6), libérer le colis (101) dans le siège (4A) de l'élément de réception (4).

9. Procédé selon la revendication 8, la réception du colis (101I) au bas de la pile (100) à l'intérieur de l'ouverture (6A) de l'élément de singularisation (6) comprenant l'étape consistant à maintenir le colis à l'intérieur de l'ouverture (6A) de l'élément de singularisation (6) par l'intermédiaire de l'élément de réception qui soutient le colis par le bas, pendant le mouvement de l'élément de singularisation (6) de la position de réception à la position de libération.

10. Procédé selon la revendication 8 ou 9, l'élément de singularisation (6) étant entraîné selon un mouvement d'oscillation ou de rotation dans une direction constante.

11. Procédé selon l'une quelconque des revendications 8 à 10, comprenant, au moyen de l'élément de préhension (12), l'étape consistant à transférer le colis du siège (4A) de l'élément de réception (4) à la machine (8).
